Europäisches Patentamt

European Patent Office

Office européen des brevets

(19)

(11) Veröffentlichungsnummer : **0 080 706**
**B1**

## (12) EUROPÄISCHE PATENTSCHRIFT

(45) Veröffentlichungstag der Patentschrift :
04.03.87

(51) Int. Cl.⁴ : **C 12 C 9/02**

(21) Anmeldenummer : 82110910.5

(22) Anmeldetag : 25.11.82

(54) **Verfahren zum diskontinuierlichen Würzekochen bei der Biererzeugung.**

(30) Priorität : 02.12.81 DE 3147620

(43) Veröffentlichungstag der Anmeldung :
08.06.83 Patentblatt 83/23

(45) Bekanntmachung des Hinweises auf die Patenterteilung : 04.03.87 Patentblatt 87/10

(84) Benannte Vertragsstaaten :
DE FR GB

(56) Entgegenhaltungen :
BE-A- 560 788
DE-A- 3 012 591
Monatsschrift für Brauerei, 34. Jahrgang, Nr. 11

(73) Patentinhaber : **Lenz, Bernhard**
**Schwarzacherstrasse 51a**
**D-8710 Kitzingen (DE)**

(72) Erfinder : **Lenz, Bernhard**
**Schwarzacherstrasse 51a**
**D-8710 Kitzingen (DE)**

(74) Vertreter : **Fuchs, Richard**
**Kantstrasse 18**
**D-8700 Würzburg (DE)**

## Beschreibung

Die Erfindung bezieht sich auf ein Verfahren zum diskontinuierlichen Würzekochen bei der Biererzeugung, bei dem die geläuterte Würze, vorzugsweise unter geringem Druck, gekocht und nach dem Kochen in einem ersten Wärmeaustauschprozeß zur weiteren Verwendung für die Biererzeugung abgekühlt wird, wobei in diesem ersten Wärmeaustauschprozeß Kühlwasser auf die Temperatur von Brauwasser erwärmt wird, und wobei ferner die Energie des beim Würzekochen erzeugten Schwadens in einem zweiten Wärmeaustauschprozeß genutzt wird.

Beim diskontinuierlichen Würzekochen ist es bekannt, die Energie des beim Kochen erzeugten Schwadens in einem Wärmeaustauscher für die Warmwassererzeugung zu nutzen. Dabei wird jedoch in der Regel trotz des an sich relativ hohen Warmwasserverbrauchs in einer Brauerei überschüssiges Warmwasser produziert. Dies geht aber zu Lasten des Primärenergieeinsatzes.

Beim abgestuften kontinuierlichen Würzekochen ist es ferner bekannt, die beim Kochen anfallenden Schwaden bzw. Brüden jeweils in einem geschlossenen Kreislauf zur Aufheizung der einzelnen Stufen innerhalb des Sudsystems zu nutzen. Dieses System ist jedoch baulich sehr aufwendig, entsprechend teuer und nicht flexibel. Außerdem beeinträchtigen die hier erforderlichen hohen Temperaturen die Würzequalität.

Der Erfindung liegt die Aufgabe zugrunde, den Würzekochprozeß der eingangs bezeichneten Art derart weiterzubilden, daß die Heizenergie der beim Kochen anfallenden Schwaden (Brüden) primär wieder dem eigentlichen Würzekochprozeß zugeführt wird und sekundär auch wahlweise für eine Warmwasserproduktion zur externen Nutzung verwendet werden kann.

Gemäß der Erfindung wird diese Aufgabe dadurch gelöst, daß das erwärmte Brauwasser in dem zweiten Wärmeaustauschprozeß durch die Schwadenenergie weiter aufgeheizt wird, daß durch dieses weiter aufgeheizte Brauwasser in einem dritten Wärmeaustauschprozeß die geläuterte Würze vor dem Kochen weiter aufgeheizt wird und daß das im dritten Wärmeaustauschprozeß abgekühlte Brauwasser wieder im zweiten Wärmeaustauschprozeß durch die Schwadenenergie aufgeheizt wird, usw.

Dadurch wird die beim Würzekochen anfallende Schwadenenergie vorteilhaft unmittelbar wieder dem Würzekochprozeß zugeführt, wobei jedoch gleichwohl im Bedarfsfall durch die Schwadenenergie aufgeheiztes Brauwasser auch für andere Zwecke abgezogen werden kann. In der Regel hat man jedoch bei der Durchführung des erfindungsgemäßen Verfahrens vorteilhaft eine konstant umlaufende Brauwassermenge, die durch die Schwadenenergie aufgeheizt zur weiteren Aufheizung der geläuterten Würze vor dem Kochen genutzt wird. Dadurch wird eine Einsparung an Primärenergie beim Würzekochen bzw. eine Reduzierung auf ca. 5 kg Dampf pro Hektoliter Würze erreicht, was vorteilhaft auch eine Reduzierung der Größe des Dampfkessels ermöglicht, der den Dampf zur Einspeisung in den Kocher für die Würzepfanne liefert. Die Erfindung verbessert somit den Energiehaushalt beim Würzekochen ganz beträchtlich.

Gemäß einer weiteren Ausgestaltung der Erfindung wird das durch die Schwadenenergie im zweiten Wärmeaustauschprozeß aufgeheizte Brauwasser vor seiner Verwendung in dem dritten Wärmeaustauschprozeß in einem Speicher gesammelt. Von diesem Speicher, der aus einer wärmegedämmten Ausführung bestehen kann, wird das heiße Brauwasser erst dann in den dritten Wärmeaustauschprozeß eingeführt, wenn ein Kochprozeß beendet ist und frische geläuterte Würze in das Kochgefäß eingelassen wird.

Bei einer bevorzugten Verfahrensführung wird das im ersten Wärmeaustauschprozeß auf ca. 78 °C erwärmte Brauwasser im zweiten Wärmeaustauschprozeß durch die Schwadenenergie auf etwa 99 °C aufgeheizt, und in dem dritten Wärmeaustauschprozeß wird die geläuterte Würze durch das heiße Brauwasser auf ca. 95 °C aufgeheizt, wobei das Brauwasser auf ca. 78 °C abgekühlt wird. Dieses auf ca. 78 °C abgekühlte Brauwasser kann vorteilhaft unmittelbar in den Brauwassertank zurückgespeist werden, in dem das Brauwasser (mit der Temperatur von ca. 78 °C) gesammelt wird.

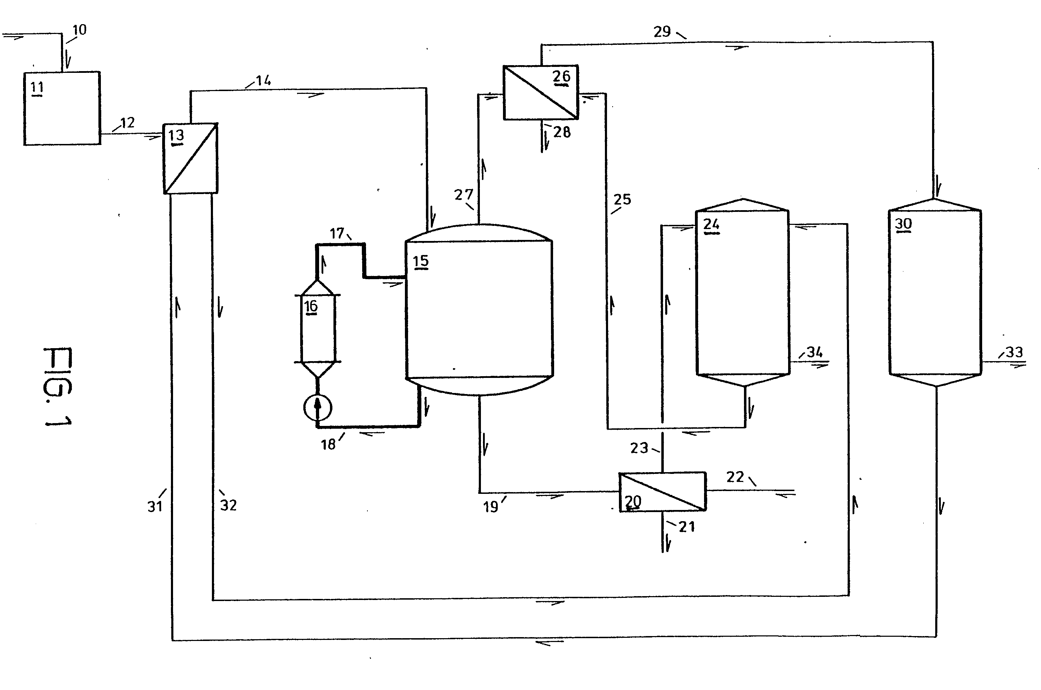

Die Erfindung wird anschließend anhand der Zeichnung näher erläutert, die schematisch und stark vereinfacht eine Anlage zur Durchführung des erfindungsgemäßen Verfahrens zeigt.

Die für das Würzekochen bestimmte, geläuterte Würze wird von dem nicht gezeigten Läuterbottich über eine Rohrleitung 10 in ein Vorlaufgefäß 11 eingeführt. Die Würze hat in diesem Vorlaufgefäß 11 eine Temperatur von ca. 70 °C. Aus diesem Vorlaufgefäß 11 wird jeweils eine zum Kochen bestimmte Würzepartie über die Rohrleitung 12, einen Wärmeaustauscher 13 und die Rohrleitung 14 in eine Würzepfanne 15 eingespeist. Die Würzepfanne 15 ist mit einem externen Kocher 16 kombiniert, in dem im Umlauf die Würze auf Kochtemperatur aufgeheizt wird. Der Kocher 16 ist zu diesem Zweck über Rohrleitungen 17 und 18 mit dem Innenraum der Würzepfanne 15 verbunden. Nach Beendigung des Kochvorgangs wird die heiße Würze über die Rohrleitung 19 in einen Wärmeaustauscher 20 eingespeist, den sie als sogenannte Kaltwürze bei 21 zur weiteren Verwendung bei der Biererzeugung verläßt. Die Abkühlung der heißen Würze im Wärmeaustauscher 20 erfolgt durch bei 22 in den Wärmeaustauscher 20 eingeführtes Wasser mit einer Temperatur von ca. 10 °C, welches im Wärmeaustauscher 20 durch die Würze auf etwa 78 °C erwärmt wird und über eine Rohrleitung 23 in einen Tank 24 für Brauwasser eingeführt werden kann. Die im Wärmeaustauscher 20 erzeugte Warmwassermenge mit etwa 78 °C ist so bemessen, wie sie für den nächsten Sud benötigt wird, so daß keine Überproduktion gegeben ist.

Während eines Würzekochprozesses, bei dem die Rohrleitungen 19, 22, 23 gesperrt sind, wird Brauwasser mit einer Temperatur von ca. 78 °C aus dem Tank 24 über eine Rohrleitung 25 in einen Wärmeaustauscher 26 eingespeist, in dem es durch die Heizenergie der beim Würzekochen erzeugten Schwaden auf ca. 99 °C aufgeheizt wird. Zu diesem Zweck ist der Wärmeaustauscher 26 über eine Rohrleitung 27 mit dem oberen Teil des Innenraums der Würzepfanne 15 verbunden. Die beim Würzekochen erzeugten Schwaden, die eine Temperatur von ca. 100 bis 110 °C aufweisen können, werden von der Würzepfanne 15 über die Rohrleitung 27 in den Wärmeaustauscher 26 eingeführt, aus dem das während des Wärmeaustauschprozesses anfallende Kondensat bei 28 abgeführt wird.

Das durch die Schwadenenergie im Wärmeaustauscher 26 auf ca. 99 °C aufgeheizte Brauwasser wird über eine Rohrleitung 29 in einen Heißwasserspeicher 30 eingespeist. In diesem wird das 99 °C heiße Brauwasser zunächst gesammelt.

Wenn nach Beendigung des Würzekochens der Inhalt der Würzepfanne 15 über die Rohrleitung 19 und den Wärmeaustauscher 20 als Kaltwürze abgeführt ist, wie vorstehend erläutert wurde, und eine neue Partie geläuterter Würze aus dem Vorlaufgefäß 11 in die Würzepfanne 15 eingeführt wird, wird der Wärmeaustauscher 13 in Funktion gesetzt. Die aus dem Vorlaufgefäß 11 in die Rohrleitung 12 einströmende Würze hat eine Temperatur von ca. 70 °C und wird im Wärmeaustauscher 13 auf ca. 95 °C weiter aufgeheizt, um mit dieser Temperatur durch die Rohrleitung 14 in die Würzepfanne 15 einzutreten. Zum Aufheizen dieser Würze benötigt daher der externe Kocher 16 weniger Frischdampf als bisher, wodurch die angestrebte Einsparung von Primärenergie bei der Dampferzeugung erreicht wird.

Die Aufheizung der geläuterten Würze im Wärmeaustauscher 13 erfolgt mittels des im Heißwasserspeicher 30 befindlichen Brauwassers von ca. 99 °C, das während dieser Arbeitsphase über eine Rohrleitung 31 in den Wärmeaustauscher 13 eingespeist wird, dort auf ca. 78 °C abgekühlt wird und den Wärmeaustauscher 13 mit dieser Temperatur über eine Rohrleitung 32 verläßt, die zurück in den Brauwassertank 24 führt. Auf diese Weise kann normalerweise eine konstante Brauwassermenge in Umlauf gehalten werden. Eine zusätzliche Einspeisung von Brauwasser in den Brauwassertank 24 wird lediglich dann erforderlich, wenn für andere (externe) Zwecke z. B. aus dem Heißwasserspeicher 30 bei 33 oder 24 bei 34 Heißwasser abgezogen wird. Eine automatische Nachspeisevorrichtung kann in diesem Fall in Funktion treten, so daß immer genügend Wasser im System vorhanden ist.

Es wird noch bemerkt, daß in der Würzepfanne 15 die Würze unter einem geringen Druck, z. B. von 1 bar, gekocht wird.

Weiter sei bemerkt, daß in der Zeichnung die zahlreichen für das vorstehend geschilderte diskontinuierliche Würzekochen erforderlichen Schieber, Ventile und Pumpen der Übersichtlichkeit wegen nicht gezeigt sind.

## Patentansprüche

1. Verfahren zum diskontinuierlichen Würzekochen bei der Biererzeugung, bei dem die geläuterte Würze, vorzugsweise unter geringem Druck, gekocht und nach dem Kochen in einem ersten Wärmeaustauschprozeß zur weiteren Verwendung für die Biererzeugung abgekühlt wird, wobei in diesem ersten Wärmeaustauschprozeß Kühlwasser auf die Temperatur von Brauwasser erwärmt wird, und wobei ferner die Energie des beim Würzekochen erzeugten Schwadens in einem zweiten Wärmeaustauschprozeß genutzt wird, dadurch gekennzeichnet, daß das erwärmte Brauwasser in dem zweiten Wärmeaustauschprozeß (Wärmeaustauscher 26) durch die Schwadenenergie weiter aufgeheizt wird, daß durch dieses weiter aufgeheizte Brauwasser in einem dritten Wärmeaustauschprozeß (Wärmeaustauscher 13) die geläuterte Würze vor dem Kochen weiter aufgeheizt wird und daß das im dritten Wärmeaustauschprozeß abgekühlte Brauwasser wieder im zweiten Wärmeaustauschprozeß (Wärmeaustauscher 26) durch die Schwadenenergie aufgeheizt wird, usw.

2. Verfahren nach Anspruch 1, dadurch gekennzeichnet, daß das durch die Schwadenenergie im zweiten Wärmeaustauschprozeß (Wärmeaustauscher 26) aufgeheizte Brauwasser vor seiner Verwendung in dem dritten Wärmeaustauschprozeß in einem Speicher gesammelt wird.

3. Verfahren nach Anspruch 1, dadurch gekennzeichnet, daß das im ersten Wärmeaustauschprozeß auf ca. 78 °C erwärmte Brauwasser im zweiten Wärmeaustauschprozeß durch die Schwadenenergie auf etwa 99 °C aufgeheizt wird, und daß in dem dritten Wärmeaustauschprozeß die geläuterte Würze durch das heiße Brauwasser auf ca. 95 °C aufgeheizt und das Brauwasser dabei auf ca. 78 °C abgekühlt wird.

## Claims

1. Process for discontinuously cooking wort in the production of beer, wherein the clarified wort is cooked, preferably under low pressure, and after cooking is cooled in a first heat exchange process for further use for beer production, cooling water being heated to the temperature of brewing water in this first heat exchange process, and the energy of the vapour produced in the cooking of the wort being moreover used in a second heat exchange process, characterised in that the heated brewing water is further heated in the second heat exchange process (heat exchanger 26) by the energy of the vapour, the clarified wort is further heated prior to cooking by this further heated brewing water in a third heat exchange process (heat exchanger 13) and the brewing water cooled in the third heat exchange process is heated again in the second heat exchange process (heat exchanger 26) by the energy of the vapour, etc.

2. Process according to claim 1, characterised in that the brewing water heated by the energy of the vapour in the second heat exchange process (heat exchanger 26) is accumulated in a storage tank prior to its use in the third heat exchange process.

3. Process according to claim 1, characterised in that the brewing water heated to about 78 °C in the first heat exchange process is heated to about 99 °C in the second heat exchange process by the energy of the vapour, and in the third heat exchange process the clarified wort is heated to about 95 °C by the hot brewing water and in so doing the brewing water is cooled to about 78 °C.

**Revendications**

1. Procédé pour la cuisson par ébullition discontinue du moût lors de la fabrication de la bière, dans lequel le moût clarifié est, avantageusement sous pression réduite, cuit avec ébullition et, après la cuisson, est refroidi dans une première opération d'échange de chaleur pour être utilisé ensuite à la production de la bière, l'eau de refroidissement étant, dans cette première opération d'échange de chaleur, chauffée à la température de l'eau à brasser, et l'énergie de la vapeur produite lors de l'ébullition du moût étant utilisée dans une seconde opération d'échange de chaleur, procédé caractérisé en ce que l'eau à brasser, chauffée, est encore chauffée davantage dans la seconde opération d'échange de chaleur (échangeur 26 de chaleur) par l'énergie calorifique des vapeurs, en ce que le moût clarifié est, avant son ébullition, chauffé encore davantage dans une troisième opération d'échange de chaleur (échangeur 13 de chaleur) par cette eau à brasser qui est encore davantage chauffée et en ce que l'eau à brasser, refroidie dans la troisième opération d'échange de chaleur, est chauffée à nouveau dans la seconde opération d'échange de chaleur (échangeur 26 de chaleur) par l'énergie calorifique des vapeurs, et ainsi de suite.

2. Procédé selon la revendication 1, caractérisé en ce que, avant son utilisation dans la troisième opération d'échange de chaleur, l'eau à brasser, chauffée par l'énergie calorifique des vapeurs dans la seconde opération d'échange de chaleur (échangeur 26 de chaleur) est collectée dans un réservoir.

3. Procédé selon la revendication 1, caractérisé en ce que l'eau à brasser, chauffée à environ 78 °C dans la première opération d'échange de chaleur, est chauffée à environ 99 °C par l'énergie calorifique des vapeurs dans la seconde opération d'échange de chaleur et en ce que, dans la troisième opération d'échange de chaleur, le moût clarifié est chauffé à environ 95 °C par l'eau chaude à brasser et l'eau à brasser est ainsi refroidie à environ à 78 °C.

FIG. 1